# EUROPÄISCHE PATENTSCHRIFT

(11) **EP 3 672 771 B1**
(45) Veröffentlichungstag und Bekanntmachung des Hinweises auf die Patenterteilung: **07.06.2023**
(21) Anmeldenummer: 18750231.5
(22) Anmeldetag: 13.08.2018
(51) Int. Cl.: B27N 3/00, B27N 3/02, B27N 3/04, C08L 97/02, B32B 21/02, B32B 21/04, B32B 21/14

(54) **VERFAHREN ZUR HERSTELLUNG VON LIGNOCELLULOSEWERKSTOFFEN IN GEGENWART VON CAPROLACTAM UND DESSEN OLIGOMEREN**
METHOD FOR THE PREPARATION OF LIGNOCELLULOSE MATERIALS IN THE PRESENCE OF CAPROLACTAM AND ITS OLIGOMERS
PROCÉDÉ DE FABRICATION DE MATÉRIAUX EN LIGNOCELLULOSE EN PRÉSENCE DE CAPROLACTAME ET DE SES OLIGOMÈRS

(30) Priorität: 23.08.2017 EP 17187501
(43) Veröffentlichungstag der Anmeldung: 01.07.2020
(73) Patentinhaber: BASF SE, 67056 Ludwigshafen (DE)
(72) Erfinder: MUELLER, Christian, 67056 Ludwigshafen (DE); LINDNER, Jean-Pierre Berkan, 67056 Ludwigshafen (DE); WEINKOETZ, Stephan, 67056 Ludwigshafen (DE); KRONIG, Sabrina, 49448 Lemförde (DE)
(74) Vertreter: BASF IP Association
(86) Internationale Anmeldenummer: PCT/EP2018/071868
(87) Internationale Veröffentlichungsnummer: WO 2019/038115

(56) Entgegenhaltungen:
- WO-A1-99/30882
- WO-A1-2016/156226
- WO-A1-2016/180830
- GB-A- 2 524 714

## Beschreibung

Die vorliegende Erfindung betrifft ein Verfahren zur Herstellung von Isocyanat-basierten Lignocellulosewerkstoffen in Gegenwart von Caprolactam, Oligomeren des Caprolactams oder deren Gemischen. Darüber hinaus betrifft die vorliegende Erfindung die so erhältlichen Lignocellulosewerkstoffe sowie deren Verwendung im Möbelbau, Hausbau, Innenausbau und Messebau.

Aus der WO-2015/104349 ist ein Verfahren zur Herstellung von Isocyanat-gebundenen Lignocellulose-Werkstoffen bekannt.

Aus der US-B-6,458,238 ist ein Verfahren zur Herstellung von Lignocellulosewerkstoffen bekannt, bei dem Bindemittel aus einer Polyisocyanat-Komponente und N-Alkylpyrrolidon als Synergist zusammengesetzt sind. Nachteilig an diesen Systemen ist einerseits der hohe Preis und andererseits deren Toxizität.

Aus der DE-OS-24 44 002 ist ein Verfahren zur Herstellung von Spanplatten bekannt, das anstelle der bewährten Aminoplast-Leimharze als Spanplattenbindemittel 4,4'-Diphenylmethandiisocyanat (4,4'-MDI) empfiehlt, bei dem man die Späne vor, während oder nach dem Auftrag des Bindemittels mit einem Säureamid behandelt.

Nachteilig an dem Verfahren der DE-OS-24 44 002 ist, dass das 4,4'-MDI bei Raumtemperatur (25°C) als Feststoff vorliegt, zum Verkleben von Holzspänen flüssig sein muss und bei erhöhter Temperatur im flüssigen Zustand eine so niedrige Viskosität hat, dass ein signifikanter Teil der Bindemittelmenge in das Holz eindringt und damit für das Verkleben der Lignocellulose-Fasern nicht mehr zur Verfügung steht (M. Dunky, P. Niemz, Holzwerkstoffe und Leime: Technologie und Einflussfaktoren, Springer Berlin Heidelberg, 2002, S. 727).

Die DE-OS-1 653 178 offenbart polymeres Diphenylmethandiisocyanat (pMDI) als Bindemittel.

Aus der WO2016/156226A1 ist Verfahren zur diskontinuierlichen oder kontinuierlichen Herstellung von ein- oder mehrschichtigen Lignocellulosewerkstoffen bekannt, enthaltend die Verfahrensschritte
(I) Mischen der Komponenten der einzelnen Schichten,
(II) Streuen der in Verfahrensschritt (I) hergestellten Mischung(en) zu einer Matte,
(III) gegebenenfalls Vorverdichtung der gestreuten Matte und
(IV) Heißpressen der gegebenenfalls vorverdichteten Matte,dadurch gekennzeichnet, dass man im Verfahrensschritt (I) für den Kern von mehrschichtigen oder für einschichtige Lignocellulosewerkstoffe eine Mischung (Komponente A) enthaltend

a1) 50 bis 99 Gew.-% organisches Isocyanat mit mindestens zwei Isocyanatgruppen oder deren Gemische und
a2) 1 bis 50 Gew.-% organisches C4- bis C15-Carbonsäureanhydrid oder deren Gemische und
a3) 0 bis 30 Gew.-% Hilfsmittel oder deren Gemische
einsetzt.

Aus der WO2016/180830 A1 ist ein Verfahren zur Herstellung eines Masterbatches (M) bekannt, der die Komponenten
(A) mindestens ein Lactam und
(D) mindestens ein Fasermaterial enthält, dadurch gekennzeichnet, dass die Komponenten (A) und (D) in einem Extruder mit einer Scherrate von mindestens 500 s-1 compoundiert werden, und dass der Extruder mindestens die folgenden Abschnitte umfasst

(I) einen ersten Abschnitt,
(II) einen zweiten Abschnitt und
(III) einen dritten Abschnitt,wobei der Extruder im ersten Abschnitt (I) eine erste Temperatur (T1), im zweiten Abschnitt (II) eine zweite Temperatur (T2) und im dritten Abschnitt (III) eine dritte Temperatur (T3) aufweist, wobei die zweite Temperatur (T2) im Bereich von 105 bis 220 °C liegt.

Aus der WO99/30882 A1 sind Formkörper bekannt, bestehend im wesentlichen aus
A) Holzteilchen und/oder cellulosehaltigem Material (Komponente A) und
B) einem porösen PU-Bindemittel (Komponente B), wobei das Gewichtsverhältnis der Komponente B) zu der Komponente A) im Bereich von 0,05 bis 1,0 liegt und
wobei der Formkörper durch Umsetzung mindestens eines Polyisocyanates mit mindestens einem Polyol und/oder Polyamin und mindestens einem Treibmittel in Gegenwart der Komponente A) bei einem Anfangsdruck von wenigstens 1 kp/cm2 erhältlich ist, dadurch gekennzeichnet, daß das Treibmittel eine Carbonsäure enthält.

Aus der GB1524714 1 ist eine Vorrichtung zum Heißverbinden einer Anordnung aus ersten und zweiten Elementen bekannt, wobei die Vorrichtung ein Druckelement mit einer flexiblen Wand, eine flexible Heizplatte in Kontakt mit der flexiblen Wand, ein Trägerelement mit einem darin befindlichen Hohlraum zur Aufnahme einer Anordnung aus ersten und zweiten Elementen, wobei der Hohlraum zum Heizpaneel weist, Mittel zum Druckbeaufschlagen von mindestens einem durch das Druckelement definierten Abteil, um dadurch die flexible Wand zu verformen und das Heizpaneel in Richtung des Trägerelements zu drängen und Druck auf eine Anordnung im Hohlraum auszuüben, umfasst, wobei die Anordnung durch die Heizplatte beheizbar ist.

Aus der DE-OS-1 653 199 ist ein Verfahren zur Herstellung von mit Deckschichten versehenen Formkörpern (u.a. Spanplatten) bekannt, enthaltend zerkleinertes anorganisches und/oder organisches wasserhaltiges Material, vorzugsweise Holzspäne, mit Polyisocyanaten, die spezifiziert sind als alle bekannten di- und polyfunktionellen Isocyanate z.B. 4,4'-MDI und pMDI.

Der vorliegenden Erfindung lag die Aufgabe zugrunde, den zuvor genannten Nachteilen abzuhelfen und ein Verfahren zur Herstellung von Lignocellulosewerkstoffen aufzufinden, bei dem die gestreute Matte eine hohe Anfangsklebrigkeit (Kaltklebrigkeit) aufweist und das Verfahren mit einer verkürzten Presszeiten durchgeführt werden kann.

Demgemäß wurde ein neues und verbessertes Verfahren zur Herstellung von ein- oder mehrschichtigen Lignocellulosewerkstoffen bestehend aus einer oder mehreren Schicht(en) (S) und gegebenenfalls einer oder mehreren weiteren Schicht(en) (WS) umfassend die Verfahrensschritte
(I) Mischen der Komponenten zu einer oder mehreren Mischung(en),
(II) Streuen der in Verfahrensschritt (I) hergestellten Mischung(en) zu einer Matte,
(III) Vorverdichtung der gestreuten Matte und
(IV) Erhitzen und Pressen der vorverdichteten Matte,
gefunden, wobei die in Verfahrensschritt (I) verwendete(n) Mischung(en) für die eine oder mehreren Schicht(en) (S) Lignocellulose-Partikel (Komponente L),
- Caprolactam, Oligomere des Caprolactams und/oder deren Gemische (Komponente A),
- Bindemittel auf Basis von Isocyanat enthaltend mehrkerniges Diphenylmethandiisocyanat (Komponente B),
- Wasser (Komponente C) und
- gegebenenfalls einen oder mehrere Zusatzstoff(e) (Komponente D)
enthalten.

Die entsprechenden Verfahren zur Herstellung von Lignocellulosewerkstoffen umfassend die Verfahrensschritte (I) bis (IV) sind dem Fachmann grundsätzlich bekannt und beispielsweise in M. Dunky, P. Niemz, Holzwerkstoffe und Leime, Teil 1 Kapitel 4, Springer Verlag Heidelberg, 2002 oder in A. Wagenführ, F. Scholz, Taschenbuch der Holztechnik, Kapitel 2, Fachbuchverlag Leipzig im Carl Hanser Verlag, 2012 oder H. Thoemen, M. Irle, M. Sernek (ed.), Wood-Based Panels - An Introduction for Specialists, Kapitel 1, COST Office, Brunel University Press, London, UB8 3PH, England beschrieben. Das erfindungsgemäße Verfahren kann diskontinuierlich oder kontinuierlich, bevorzugt kontinuierlich durchgeführt werden.

### Verfahrensschritt (III) - Vorverdichtung

Unter Vorverdichtung ist die Verringerung der Dicke der gestreuten Matte durch mechanische Einflussnahme zu verstehen. Die Vorverdichtung erfolgt hierbei zusätzlich zu dem Pressen im Rahmen von Verfahrensschritt (IV).

Die gestreute Matte wird einer Vorpressung (Vorverdichtung) unterzogen, um eine bestimmte Festigkeit der gestreuten Matte zu erreichen. Die Temperatur der Pressflächen der Vorpresse beträgt in der Regel von 5 bis 60°C, vorzugsweise von 5 bis 40°C, insbesondere 10 bis 30°C, besonders bevorzugt von 15 bis 25°C.

Eine Vorverdichtung kann im Falle von mehreren Schichten nach dem Streuen jeder einzelnen Schicht oder nach dem Streuen aller Schichten stattfinden. Bevorzugt wird die Vorverdichtung nach dem Streuen aller Schichten übereinander durchgeführt.

Die Vorverdichtung kann nach dem Fachmann bekannten Verfahren erfolgen, wie sie beispielsweise in M. Dunky, P. Niemz, Holzwerkstoffe und Leime, Springer Verlag Heidelberg, 2002, Seite 819 oder in H.-J. Deppe, K. Ernst, MDF - Mitteldichte Faserplatte, DRW-Verlag, 1996, Seiten 44, 45 und 93 oder in A. Wagenführ, F. Scholz, Taschenbuch der Holztechnik, Fachbuchverlag Leipzig, 2012, Seite 219, beschrieben sind.

Die Vorverdichtung kann in einem, zwei oder mehreren Schritten erfolgen.

Die Vorverdichtung erfolgt in der Regel bei einem Druck von 1 bis 30 bar, bevorzugt 2 bis 25 bar, besonders bevorzugt 3 bis 20 bar.

Zwischen Anfang des Verfahrensschritts (II) und Anfang des Verfahrensschritts (III), also von Beginn der Streuung bis Beginn der Vorverdichtung, kann beispielsweise ein Zeitraum von 1 bis 120 Sekunden, bevorzugt 2 bis 60 Sekunden, besonders bevorzugt 3 bis 20 Sekunden liegen.

### Verfahrensschritt (IV) - Erhitzen und Pressen der vorverdichteten Matte

Erfindungsgemäß erfolgt anschließend das Erhitzen und Pressen der vorverdichteten Matte. Dies ist erforderlich, um den Binder auszuhärten.

Im Verfahrensschritt (IV) wird die Dicke der Matte durch Anlegen eines Pressdrucks (weiter) verringert oder zumindest konstant gehalten. Darüber hinaus wird die Temperatur der Matte durch Eintragen von Energie erhöht. Im einfachsten Fall wird ein konstanter Pressdruck angelegt und die Matte gleichzeitig durch eine Energiequelle konstanter Leistung erwärmt. Sowohl der Energieeintrag als auch die Verdichtung mittels Pressdruck kann aber auch zu jeweils unterschiedlichen Zeitpunkten und in mehreren Stufen erfolgen. Der Energieeintrag beim Verfahrensschritt (IV) kann durch Wärmeübergang von erwärmten Flächen, beispielsweise Pressblechen, auf die Matte erfolgen. Der Energieeintrag kann auch durch Anlegen eines elektromagnetischen Feldes erfolgen. Bevorzugt erfolgt der Energieeintrag durch Wärmeübergang von erwärmten Flächen auf die Matte.

Beim Energieeintrag durch Anlegen eines hochfrequenten elektromagnetischen Feldes wird die Matte so erwärmt, dass nach Abschalten des hochfrequenten elektromagnetischen Feldes im Verfahrensschritt (IV) die Mitte der verdichteten Matte eine Temperatur von vorzugsweise mindestens 80°C aufweist, insbesondere 80 bis 170°C. Unter Mitte der verdichteten Matte ist die Stelle in der Matte zu verstehen, die zu beiden Pressflächen (in senkrechter Richtung) den gleichen Abstand aufweist. Die Temperatur in der Mitte der Matte beträgt dabei bevorzugt mindestens 90°C, insbesondere 90 bis 170°C, besonders bevorzugt mindestens 100°C, insbesondere 100 bis 170°C, ganz bevorzugt mindestens 110°C, insbesondere 110 bis 170°C.

Bei dem angelegten hochfrequenten elektromagnetischen Feld kann es sich um Mikrowellenstrahlung oder um ein hochfrequentes elektrisches Feld handeln, das nach Anlegen eines hochfrequenten Wechselspannungsfeldes an einen Plattenkondensator zwischen den beiden Kondensatorplatten entsteht.

In einer bevorzugten Ausführungsform kann im Rahmen von Verfahrensschritt (IV) zunächst ein Verdichtungsschritt und danach das Erwärmen durch Einwirkung hochfrequenter elektromagnetischer Strahlung durchgeführt werden.

Hierzu kann die gestreute und verdichtete Matte mittels eines Förderbandes durch einen Bereich zwischen parallel angeordneten Plattenkondensatoren durchgeführt werden.

Eine Vorrichtung für einen kontinuierlichen Prozess, um die Erwärmung mittels Anlegen eines hochfrequenten elektromagnetischen Feldes nach der Verdichtung innerhalb der gleichen Maschine zu realisieren, ist beispielsweise in WO-97/28936 beschrieben.

Die Erwärmung unmittelbar nach dem Verdichtungsschritt kann auch in einer diskontinuierlich arbeitenden Hochfrequenz-Presse erfolgen.

In einer weiteren bevorzugten Ausführungsform erfolgt das Erhitzen und Pressen der vorverdichteten Matte im Rahmen von Verfahrensschritt (IV) durch Wärmeübergang von erwärmten Flächen auf die Matte (Heißpressen). Der Energieeintrag durch Heißpressen erfolgt üblicherweise durch Kontakt der Matte mit beheizten Pressflächen, die Temperaturen von 80 bis 300°C, bevorzugt 120 bis 280°C, besonders bevorzugt 150 bis 250°C aufweisen, wobei während des Energieeintrags bei einem Druck von 1 bis 50 bar, bevorzugt 3 bis 40 bar, besonders bevorzugt 5 bis 30 bar gepresst wird. Das Pressen kann nach allen dem Fachmann bekannten Verfahren erfolgen (siehe Beispiele in "Taschenbuch der Spanplatten Technik" H.-J. Deppe, K. Ernst, 4. Aufl., 2000, DRW - Verlag Weinbrenner, Leinfelden-Echterdingen, Seite 232 bis 254, und "MDF- Mitteldichte Faserplatten" H.-J. Deppe, K. Ernst, 1996, DRW- Verlag Weinbrenner, Leinfelden-Echterdingen, Seite 93 bis 104). Bevorzugt werden kontinuierliche Pressverfahren, beispielsweise mit Doppelbandpressen, verwendet. Die Pressdauer beträgt üblicherweise 2 bis 15 Sekunden pro mm Plattendicke, bevorzugt 2 bis 10 Sekunden pro mm Plattendicke, besonders bevorzugt 2 bis 6 Sekunden pro mm Plattendicke, insbesondere 2 bis 4 Sekunden pro mm Plattendicke.

Erfolgt der Energieeintrag im Verfahrensschritt (IV) durch a) Anlegen eines hochfrequenten elektromagnetischen Feldes und durch b) Heißpressen, dann wird bevorzugt zunächst das hochfrequente elektrische Feld angelegt und danach das Heißpressen ausgeführt.

Zwischen Anfang des Verfahrensschritts (II) und Anfang des Verfahrensschritts (IV), also von Beginn der Streuung bis Beginn des Erhitzens und/oder Pressens, kann beispielsweise ein Zeitraum von 5 bis 300 Sekunden, bevorzugt 7 bis 120 Sekunden, besonders bevorzugt 10 bis 60 Sekunden liegen.

Die erfindungsgemäß hergestellten Lignocellulosewerkstoffe können ein- oder mehrschichtig sein.

In einer ersten Ausführungsform bestehen die erfindungsgemäß hergestellten Lignocellulosewerkstoffe ausschließlich aus einer oder mehreren Schicht(en) (S), bevorzugt einer Schicht (S), d.h. die Lignocellulosewerkstoffe enthalten keine weitere Schichten (WS) .

In einer zweiten bevorzugten Ausführungsform bestehen die erfindungsgemäß hergestellten Lignocellulosewerkstoffe neben einer oder mehreren Schicht(en) (S) aus ein oder mehreren weiteren Schichten (WS).

Unter weiteren Schichten (WS) sind allgemein solche Schichten zu verstehen, die sich von der Schicht oder den Schichten (S) unterscheiden, d.h. die Anforderungen an eine Schicht (S) nicht erfüllen. Weitere Schichten (WS) können sich im Lignocellulosewerkstoff ober- und/oder unterhalb der einen oder mehreren Schicht(en) (S) befinden. Besteht der Lignocellulosewerkstoff aus mehreren Schichten, dann werden die Schichten, die Grenzschichten zur Umgebung sind, also die äußeren Schichten des Lignocellulosewerkstoffs bilden, als Deckschichten bezeichnet. Die Deckschichten können entweder Schichten (S) oder weitere Schichten (WS) sein, bevorzugt weitere Schichten (WS). Die Deckschichten enthalten bevorzugt höchstens 50%, besonders bevorzugt höchstens 35% der Gesamtmasse des kompletten Lignocellulosewerkstoffs.

Besonders bevorzugt sind die Schichten des Lignocellulosewerkstoffs so angeordnet, dass die Mitte der verdichteten Matte bzw. des fertigen Lignocellosewerkstoffs in einer Schicht (S) liegt.

In einer besonders bevorzugten Ausführungsform ist der Lignocellulosewerkstoff dreischichtig aufgebaut und besteht aus einer Mittelschicht, die eine Schicht (S) ist, und zwei Deckschichten, die entweder Schichten (S) oder weitere Schichten (WS), bevorzugt weitere Schichten (WS) sind.

Grundsätzlich kommen alle dem Fachmann für die Herstellung von Lignocellulosewerkstoffen bekannten Arten von weiteren Schichten, insbesondere Deckschichten in Betracht. Geeignete weitere Schichten, insbesondere Deckschichten und deren Aufbringung sind beispielsweise in der WO-2016/156226 beschrieben.

Die Mischung(en) der Schicht(en) (S) enthalten vorzugsweise Lignocellulose-Partikel (Komponente L) und
- 0,001 bis 4 Gew.-%, bevorzugt 0,001 bis 3 Gew.-%, besonders bevorzugt 0,01 bis 2 Gew.-%, insbesondere 0,05 bis 1 Gew.-% Komponente A,
- 0,5 bis 10 Gew.-%, bevorzugt 1 bis 5 Gew.-%, besonders bevorzugt 1,5 bis 4 Gew.-%, insbesondere 2 bis 3,5 Gew.-% Komponente B,
- 3 bis 16 Gew.-%, bevorzugt 8 bis 14 Gew.-%, besonders bevorzugt 8 bis 12 Gew.-% Komponente C,
- 0 bis 30 Gew.-%, bevorzugt 0 bis 20 Gew.-%, besonders bevorzugt 0 bis 10 Gew.-%, insbesondere 0 bis 5 Gew.-% Komponente D,
jeweils bezogen auf 100 Gew.-% Trockengewicht der Komponente L.

Das Trockengewicht bezieht sich im Rahmen der vorliegenden Erfindung auf das Gewicht der Komponente L im darrtrockenen Zustand, bisweilen auch als absolut trocken (atro) bezeichnet. Es wird durch die Darrmethode bestimmt, bei der die Probe im Wärmeschrank bei 103°C bis zur Gewichtskonstanz getrocknet wird. Einzelheiten sind in der DIN EN 13183-1 geregelt.

### Komponente L: Lignocellulose-Partikel

Lignocellulose-Partikel werden in der Regel durch Zerkleinerung von lignocellulose-haltigen Stoffen hergestellt. Lignocellulose-haltige Stoffe sind Stoffe, die verholztes Pflanzenmaterial enthalten. Unter Verholzung versteht man die chemische und physikalische Veränderung der Zellwände der Pflanzen durch Einlagerungen von Lignin. Die wichtigsten lignocellulosehaltigen Stoffe sind Holz. Aber auch andere Pflanzen, die Lignin enthalten, oder land- und forstwirtschaftliche Roh- und Reststoffe, die Lignin enthalten, wie z.B. Stroh, Flachsschäben oder Baumwollstängel, können verwendet werden. Geeignet sind auch Palmen oder Gräser mit verholzten Stämmen, beispielsweise Bambus. Eine weitere Quelle für lignocellulosehaltige Partikel sind Altpapier oder Altholz, beispielsweise alte Möbel. Die eingesetzten lignocellulosehaltigen Partikel können Fremdstoffe enthalten, die nicht aus den lignocellulosehaltigen Pflanzen stammen. Der Gehalt an Fremdstoffen kann in weiten Bereichen variiert werden und beträgt in der Regel 0 bis 30 Gew.-%, bevorzugt 0 bis 10 Gew.-%, besonders bevorzugt 0 bis 5 Gew.-%, insbesondere 0 bis 1 Gew.-%. Fremdstoffe können Kunststoffe, Klebstoffe, Beschichtungen, Farbstoffe, etc. sein, die beispielsweise im Altholz enthalten sind. Der Begriff Lignocellulose ist dem Fachmann bekannt.

Es können ein oder mehrere lignocellulosehaltige Stoffe eingesetzt werden. Unter mehreren lignocellulosehaltigen Stoffen werden in der Regel 2 bis 10, bevorzugt 2 bis 5, besonders bevorzugt 2 bis 4, insbesondere 2 oder 3 unterschiedliche lignocellulosehaltige Stoffe verstanden.

Die lignocellulosehaltigen Partikel werden in Form von Fasern, Streifen, Späne, Staub oder deren Gemische, bevorzugt Späne, Fasern, Staub oder deren Gemische, besonders bevorzugt Späne, Fasern oder deren Gemische eingesetzt. Die Fasern, Streifen oder Späne werden in der Regel durch Zerkleinern von Ausgangsmaterialien erzeugt. Geeignete Ausgangsmaterialien sind gewöhnlich lignocellulosehaltige Pflanzen und Pflanzenteile. Geeignete Pflanzen sind beispielsweise Bäume, Gräser, Flachs, Hanf oder deren Gemische, bevorzugt Bäume.

Bevorzugt werden als lignocellulosehalige Partikel Holzfasern oder Holzlagen, Holzstreifen, Sägespäne, Holzspäne, Hobelspäne, Holzstaub oder deren Gemische, bevorzugt Holzspäne, Holzfasern, Holzstaub oder deren Gemische, besonders bevorzugt Holzspäne, Holzfasern oder deren Gemische eingesetzt.

Für die Herstellung der Holzpartikel kommt jede beliebige Nadelholz- und Laubholzart Holzart, u.a. aus Industrierestholz, Durchforstungsholz oder Plantagenholz in Frage, bevorzugt Eukalyptus-, Fichten-, Buchen-, Kiefern-, Lärchen-, Linden-, Pappel-, Eschen-, Eichen-, Tannenholz oder deren Gemische, besonders bevorzugt Eukalyptus-, Fichten-, Kiefern- und Buchenholz oder deren Gemische, insbesondere Eukalyptus-, Kiefern- und Fichtenholz oder deren Gemische.

Die Dimensionen der zerkleinerten lignocellulosehaltigen Partikel sind nicht kritisch und richten sich nach dem herzustellenden Lignocellulosewerkstoff. Je nachdem welche Lignocellulose-Partikel (Komponente L) eingesetzt werden, erhält man als Lignocellulosewerkstoffe MDF (Mitteldichte Faserplatten), HDF (Hochdichte Faserplatten), PB (Spanplatten), OSB (Grobspanplatten) oder WFI (Holzfaserdämmmatten).

Große Späne, die zum Beispiel für die Herstellung von OSB-Platten verwendet werden, heißen auch Strands. Die mittlere Größe der Strands beträgt in der Regel 20 bis 300 mm, bevorzugt 25 bis 200 mm, besonders bevorzugt 30 bis 150 mm.

Für die Herstellung von Spanplatten werden in der Regel kleinere Späne verwendet. Die dafür benötigten Partikel können mittels Siebanalyse der Größe nach klassifiziert werden. Die Siebanalyse wird zum Beispiel in der DIN 4188 oder der DIN ISO 3310 beschrieben. Die mittlere Größe der Partikel beträgt in der Regel 0,01 bis 30 mm, bevorzugt 0,05 bis 25 mm, besonders bevorzugt 0,1 bis 20 mm.

Als Fasern eignen sich Holzfasern, Hanffasern, Bambusfasern, Miscanthus, Bagasse (Zuckerrohr) oder deren Gemische, bevorzugt Holzfasern, oder deren Gemische. Die Länge der Fasern beträgt in der Regel 0,01 bis 20 mm, bevorzugt 0,05 bis 15 mm, besonders bevorzugt 0,1 bis 10 mm.

Die Zerkleinerung der lignocellulosehaltigen Stoffe zu lignocellulosehaltigen Partikeln kann nach an sich bekannten Verfahren erfolgen (siehe zum Beispiel: M. Dunky, P. Niemz, Holzwerkstoffe und Leime, Seite 91 bis 156, Springer Verlag Heidelberg, 2002).

Die lignocellulosehaltigen Partikel können nach üblichen, dem Fachmann bekannten Methoden der Trocknung mit den danach üblichen geringen Mengen Wasser (in einer üblichen geringen Schwankungsbreite; sog. "Restfeuchte") erhalten werden

Die mittlere Dichte der erfindungsgemäßen lignocellulosehaltigen Ausgangsstoffe, aus denen die lignocellulosehaltigen Partikel hergestellt werden, ist beliebig und liegt in der Regel bei 0,2 bis 0,9 g/cm³, bevorzugt bei 0,4 bis 0,85 g/cm³, besonders bevorzugt bei 0,4 bis 0,75 g/cm³, insbesondere bei 0,4 bis 0,6 g/cm³. Als Dichte ist hierbei die Rohdichte bei Normalklima (20°C/65% Luftfeuchte) gemeint, wie sie in der DIN 1306 definiert ist, also unter Berücksichtigung der im lignocellulosehaltigen Ausgangsstoff, z.B. dem Holzstamm, enthaltenen Hohlräume.

### Komponente A

Erfindungsgemäß enthalten die in Verfahrensschritt (I) verwendete(n) Mischung(en) für die Schicht(en) (S) als Komponente A Caprolactam, Oligomere des Caprolactams und/oder deren Gemische. Die vorgenannten Verbindungen wirken als Beschleuniger für die Härtung des Bindemittels. Unter Beschleuniger sind solche Verbindungen zu verstehen, die die Abreaktion von NCO-Gruppen im erfindungsgemäßen Verfahren beschleunigen.

Vorzugsweise setzt man von 0,001 bis 4 Gew.-% der Komponente A bezogen auf 100 Gew.-% Trockengewicht der Komponente L ein, insbesondere 0,001 bis 3 Gew.-%, ganz besonders bevorzugt 0,01 bis 2 Gew.-%, insbesondere 0,05 bis 1 Gew.-%.

Sofern Oligomere des Caprolactams enthalten sind, können diese linear oder zyklisch sein und weisen vorzugsweise eine zahlengemittelte Kettenlänge von 2 bis 10, besonders bevorzugt 2 bis 7, ganz besonders bevorzugt 2 bis 4 auf. Mischungen aus Caprolactam und Oligomeren des Caprolactams weisen entsprechend eine zahlengemittelte Kettenlänge von mehr als 1 bis höchstens 10, besonders bevorzugt von mehr als 1 bis 7 und ganz besonders bevorzugt von 1,5 bis 4 auf.

Caprolactam ist als Komponente A besonders bevorzugt.

Als Lösungen bzw. Suspensionen der Komponente A eignen sich 1 bis 95 Gew.-%ige, bevorzugt 5 bis 90 Gew.-%ige, besonders bevorzugt 20 bis 80 Gew.-%ige, insbesondere 40 bis 80 Gew.-%ige Lösungen bzw. Suspensionen.

Die Komponente A wird in einer bevorzugten Ausführungsform in einer wässrigen Lösung mit einer Konzentration von mindestens 25 Gew.-%, bevorzugt mindestens 40 Gew.-% und maximal 80 Gew.-%, bevorzugt maximal 60 Gew.-%, bezogen auf das Gesamtgewicht der Lösung eingesetzt.

Die Komponente A wird in einer weiteren bevorzugten Ausführungsform als Lösung in einem Polyol oder einer Mischung aus Polyolen oder einer Mischung aus Polyol(en) und Wasser eingesetzt.

Die Komponente A wird in einer weiteren bevorzugten Ausführungsform in dem Polyol bzw. der Mischung aus Polyolen oder der Mischung aus Polyol(en) und Wasser mit einer Konzentration von mindestens 25 Gew.-%, bevorzugt mindestens 40 Gew.-% und maximal 80 Gew.-%, bevorzugt maximal 60 Gew.-%, bezogen auf das Gesamtgewicht der Lösung eingesetzt. Insbesondere eignen sich Mischungen aus Polyol und Caprolactam, bei denen das Molverhältnis von 2:1 bis 1:2, insbesondere 1:1 beträgt. Weiterhin eignen sich bevorzug Mischungen aus Polyol und Caprolactam, bei denen pro OH-Funktionalität des Polyols ein Teil Caprolactam vorliegt, zum Beispiel bei Glycerin / Caprolactam aufgrund der des dreiwertigen Alkohols ein Molverhältnis von 1:3 und in Butandiol / Caprolactam aufgrund des zweiwertigen Alkohols ein Molverhältnis von 1:2.

Der Fachmann wählt geeignete Lösungsmittel in Abhängigkeit von der Löslichkeit oder Suspendierbarkeit der Beschleuniger. Als Lösungs- und/oder Suspensionsmittel eignen sich Wasser, das der Komponente C zuzuordnen ist, oder organische Lösungs- bzw. Suspensionsmittel, die der Komponente D zuzuordnen sind, wie Alkohole, beispielsweise C₂- bis Ca-Alkanole wie Ethanol, Propanol oder Butanol, Polyole, beispielsweise 1,4-Butandiol, Glycerin, wässrige Zuckerlösungen, weitere Lösungsmittel, wie N-Methyl-2-pyrrolidon (NMP) oder Dimethylformamid (DMF) oder organische ortho-Phosphorsäureester wie Triethylphosphat (TEP), bevorzugt Wasser und Alkohole mit einer Funktionalität (OH-Gruppen) von zwei oder mehr, besonders bevorzugt Wasser, Glycerin, wässrige Zuckerlösungen und Butandiol.

Weiterhin eignen sich als Lösungs- oder Suspensionsmittel Stärkelösungen oder wässrige Emulsionen aus Stärke. Die Stärke kann auch chemisch modifiziert sein, zum Beispiel durch teilweise oder vollständige Funktionalisierung der OH-Gruppen oder durch mechanische Verfahren.

Die Lösungen bzw. Suspensionen der Komponente A können im Temperaturbereich, in dem sich das Lösungs- bzw. Suspensionsmittel im flüssigen Aggregatzustand befindet bis zu deren Siedepunkt, jedoch bei Temperaturen von mindestens 10°C, bevorzugt mindestens 20°C, besonders bevorzugt mindestens 80°C hergestellt werden. Wegen der leichteren Löslichkeit bzw. Suspensionsfähigkeit der Komponente A ist es generell vorteilhaft die Lösungen bzw. Suspensionen der Komponente A bei höheren Temperaturen herzustellen.

Für den Fall, dass Lösungen der Komponente A, die bei Temperaturen oberhalb der Raumtemperatur (25°C) hergestellt wurden, bei Raumtemperatur im festen Aggregatzustand vorliegen, ist es erforderlich, diese aufzuschmelzen, bevor diese im erfindungsgemäßen Verfahren verwendet werden können. Die Mischtemperatur ist in diesen Fällen so zu wählen, dass die Lösungen der cyclischen Amide während des Mischvorgangs im flüssigen Aggregatzustand vorliegt.

Der erfindungsgemäße Verfahrensschritt (I), das Herstellen der Mischung(en) für die Schicht(en) (S), kann wie folgt durchgeführt werden:
Die Komponente (A) kann
a) separat, d.h. zeitlich und/oder örtlich von der Komponente (B) getrennt, zu den Lignocellulose-Partikeln (Komponente (L)) zugegeben werden (2 Komponenten-System). Hierbei können
   a₁) die Komponente (A) und die Komponente (B) zeitlich oder örtlich unmittelbar nacheinander zugegeben werden,
   a₂) eine weitere Komponente (C und/oder D) örtlich oder zeitlich zwischen der Komponente (A) und Komponente (B) zugegeben werden.
b) zusammen mit der Komponente (B) zugegeben werden (1 Komponenten-System). Die Komponente (A) und Komponente (B) können
   b₁) in einem kontinuierlichen oder diskontinuierlichen Verfahren vor dem Auftragen auf die Lignocellulosefasern (L) oder
   b₂) während des Auftragens *in situ,* z.B. in einer 2-Stoff oder 3-Stoff Düse vermischt werden.

Die Komponenten (A), (B) und (C) und (D) können in beliebiger Reihenfolge auf die Komponente (L) aufgebracht werden.

In einer ersten bevorzugten Ausführungsform können Komponente (C), gefolgt von Komponente (A), ggf. gelöst in einer Teilmenge der Komponente (C), gefolgt von Komponente (B) zugegeben werden. In einer bevorzugten alternativen Ausführungsform wird Komponente (A) gefolgt von Komponente (B), gefolgt von Komponente (C) auf die Komponente (L) aufgebracht. Es ist jedoch in einer weiteren bevorzugt alternativen Ausführungsform auch möglich, Komponente (C) und Komponente (A) bzw. Komponente (C) und Komponente (B) gleichzeitig (d.h. vorab gemischt) zuzugeben, gefolgt von Komponente (B) bzw. Komponente (A).

In einer zweiten bevorzugten Ausführungsform können Komponente (A) und die Komponente (B) unmittelbar nacheinander (in beliebiger Reihenfolge) auf die Komponente (L) aufgebracht werden. Dabei eignen sich in der Regel 10 bis 80 Gew.-%ige, bevorzugt von 15 bis 60 Gew.-%ige, besonders bevorzugt von 20 bis 60 Gew.-%ige Lösungen der Komponente (A).

In einer weiteren bevorzugten Ausführungsform können zwischen der Komponente (A) und Komponente (B), wobei die Reihenfolge unkritisch ist, eine oder mehrere andere Komponente (C) oder (D) auf die Komponente (L) aufgebracht werden. Dabei eignen sich in der Regel 10 bis 95 Gew.-%ige, bevorzugt 20 bis 85 Gew.-%ige, besonders bevorzugt 40 bis 80 Gew.-%ige Lösungen von Caprolactam.

In einer weiteren bevorzugten Ausführungsform können die Komponente (B), gefolgt von der Komponente (C), gefolgt von Komponente (A) ggf. gelöst in einer Teilmenge der Komponente (D), oder Komponente (A) ggf. gelöst in einer Teilmenge der Komponente (D), gefolgt von Komponente (C), gefolgt von Komponente (B), besonders bevorzugt die Komponente (B), gefolgt von Komponente (A) ggf. gelöst in einer Teilmenge der Komponente (D), gefolgt von Komponente (C) auf die Komponente (L) aufgebracht werden. Diese Ausführungsformen eignen sich insbesondere für Lösung bzw. Suspension der cyclischen Amide in denen das Lösungs- bzw. Suspensionsmittel einen oder mehrere Alkohole enthält.

In einer weiteren Ausführungsform kann Komponente (A) als Reinstoff, d.h. ohne Lösungs- und/oder Suspensionsmittel, zugegeben werden. Sofern als Komponente (A) Caprolactam verwendet wird, ist das Caprolactam aufzuschmelzen und die Schmelze über eine vorzugsweise beheizbare Düse oder einen Atomizer aufzubringen.

In einer weiteren Ausführungsform ist Komponente (A) aus Lösungsmittel und Caprolactam und/oder Oligomeren des Caprolactam in einem solchen Mischungsverhältnis zusammengesetzt, dass Komponente (A) bei 20 bis 80°C, bevorzugt 30 bis 70°C, besonders bevorzugt von 40 bis 60°C, insbesondere bei 50°C flüssig vorliegt.

Die Mischung der vorgenannten Komponenten erfolgt in der Regel bei Temperaturen von 10 bis 100°C, bevorzugt 15 bis 80°C, besonders bevorzugt 20 bis 50°C und Normaldruck (Atmosphärendruck).

### Komponente B

Erfindungsgemäß enthält die in Verfahrensschritt (I) für die Herstellung der Schicht oder der Schichten (S) verwendete Mischung ein Bindemittel auf Basis von Isocyanat, welches mehrkerniges Diphenylmethandiisocyanat enthält. Isocyanat-basierte Bindemittel sind dem Fachmann grundsätzlich bekannt und sind beispielsweise in M. Dunky, P. Niemz, Holzwerkstoffe und Leime: Technologie und Einflussfaktoren, Springer Berlin Heidelberg, 2002 (Teil II ab Seite 249) beschrieben.

Die Bindemittel (Komponente B) enthalten erfindungsgemäß mindestens ein mehrkerniges Diphenylmethandiisocyanat. Unter mehrkernigem Diphenylmethandiisocyanat wird erfindungsgemäß mehrkerniges Diphenylmethandiisocyanat mit 3 oder mehr aromatischen Kernen verstanden, das auch als oligomeres Diphenylmethandiisocyanat bezeichnet wird. Das mehrkernige Diphenylmethandiisocyanat wir vorzugsweise im Gemisch mit weiteren Polyisocyanaten, insbesondere zweikernigem Diphenylmethandiisocyanat eingesetzt. Ein solches Gemisch wird im Rahmen der vorliegenden Erfindung als polymeres Diphenylmethandiisocyanat bezeichnet.

Die (zahlenmittlere) NCO-Funktionalität des als Komponente A eingesetzten Diphenylmethandiisocyanats kann im Bereich von ungefähr 2 bis ungefähr 4 variieren, bevorzugt von 2 bis 3, insbesondere von 2,1 bis 2,7.

Die Bindemittel (Komponente B) können neben mindestens einem mehrkernigen Diphenylmethandiisocyanat zusätzlich 2,2'-Diphenylmethandiisocyanat, 2,4'-Diphenylmethandiisocyanat, 4,4'-Diphenylmethandiisocyanat, weitere (andere) Polyisocyanate, insbesondere weitere aromatische Polyisocyanate, vorzugsweise Toluoldiisocyanat (TDI) oder Mischungen aus zwei oder mehreren der vorgenannten Verbindungen, oder Roh-MDI, welches bei der Herstellung von MDI (Diphenylmethandiisocyanat) anfällt, enthalten. Besonders bevorzugt ist mehrkerniges MDI in Mischung mit zweikernigem MDI, insbesondere 4,4'-MDI und gegebenenfalls 2,4'-MDI. Komponente B) enthält vorzugsweise von 20 bis 70 Gew.-% 4,4'-MDI bezogen auf das Gesamtgewicht der Komponente B), insbesondere von 25 bis 50 Gew.-%, besonders bevorzugt von 30 bis 45 Gew.-%.

Komponente B) enthält vorzugsweise von 25 bis 70 Gew.-% 4,4'-MDI, von 0 bis 20 Gew.-% 2,4'-MDI und von 10 bis 80 Gew.-% mehrkerniges MDI, jeweils bezogen auf das Gesamtgewicht der Komponente B).

Komponente B) enthält besonders bevorzugt von 20 bis 70 Gew.-%, insbesondere von 25 bis 50 Gew.-%, 4,4'-MDI, von 0 bis 20 Gew.-%, insbesondere von 1 bis 17 Gew.-%, besonders bevorzugt von 1 bis 12 Gew.-%, ganz besonders bevorzugt von 1 bis 10 Gew.-% 2,4'-MDI und von 10 bis 80 Gew.-%, insbesondere von 30 bis 70 Gew.-%, ganz besonders bevorzugt von 40 bis 60 Gew.-% mehrkerniges MDI jeweils bezogen auf das Gesamtgewicht der Komponente B).

Derartige Bindemittel (Komponente B) sind bekannt und werden beispielsweise von BASF SE und BASF Polyurethanes GmbH unter dem Namen Lupranat^{®} vertrieben.

Vorzugsweise beträgt der Gehalt an Isocyanatgruppen der Komponente B von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

Die Viskosität der eingesetzten Komponente B kann in einem weiten Bereich variieren. Vorzugsweise weist die Komponente B eine Viskosität von 10 bis 300 mPa•s, besonders bevorzugt von 20 bis 250 mPa•s bei 25°C, auf.

In einer weiteren Ausführungsform wird Komponente B ganz oder teilweise in Form von Polyisocyanatpräpolymeren eingesetzt.

Diese Polyisocyanatpräpolymere sind erhältlich, indem vorstehend beschriebene Polyisocyanate ganz oder teilweise vorab mit gegenüber Isocyanaten reaktiven polymeren Verbindungen zum Isocyanatpräpolymer umgesetzt werden. Die Umsetzung erfolgt im Überschuss der Polyisocyanat-Komponente, beispielsweise bei Temperaturen von 30 bis 100°C, bevorzugt bei etwa 80°C.

Geeignete polymere Verbindungen mit gegenüber Isocyanaten reaktiven Gruppen sind dem Fachmann bekannt und beispielsweise beschrieben im "Kunststoffhandbuch, 7, Polyurethane", Carl Hanser-Verlag, 3. Auflage 1993, Kapitel 3.1.

Als polymere Verbindungen mit gegenüber Isocyanaten reaktiven Gruppen kommen grundsätzlich alle bekannten Verbindungen mit mindestens zwei gegenüber Isocyanaten reaktiven Wasserstoffatomen in Betracht, beispielsweise solche mit einer Funktionalität von 2 bis 8 und einem zahlenmittleren Molekulargewicht Mₙ von 400 bis 15.000 g/mol. So können beispielsweise Verbindungen, ausgewählt aus der Gruppe der Polyetherpolyole, Polyesterpolyole oder Mischungen daraus, verwendet werden.

Geeignete Präpolymere sind beispielsweise in der DE 10314762 ausgeführt.

Der NCO-Gehalt der verwendeten Präpolymere liegt vorzugsweise im Bereich von 20 bis 32,5%, besonders bevorzugt von 25 bis 31%. Der NCO-Gehalt wird gemäß ASTM D-5155-96 A ermittelt.

Darüber hinaus können das oligomere Diphenylmethandiisocyanat oder die Diphenylmethandiisocyanate im Gemisch mit weiteren Bindemitteln eingesetzt werden. Als weitere Bindemittel kommen beispielsweise andere organische Isocyanate mit zwei oder mehr IsocyanatGruppen, deren Mischungen sowie Präpolymere aus Isocyanaten, Polyolen oder Aminen mit mindestens zwei Isocyanatgruppen und deren Gemische, insbesondere alle dem Fachmann, vorzugsweise die für die Herstellung von Lignocellulosewerkstoffen oder Polyurethanen bekannten, organischen Isocyanate oder deren Gemische. Derartige organische Isocyanate sowie ihre Herstellung und Anwendung sind beispielsweise in Becker/Braun, Kunststoff Handbuch, 3. neubearbeitete Auflage, Band 7 "Polyurethane", Hanser 1993, Seiten 17 bis 21, Seiten 76 bis 88 und Seiten 665 bis 671 beschrieben in Betracht.

### Komponente C

Wasser (Komponente C) kann separat oder ganz oder teilweise, in Form von feuchten Lignocellulose-Partikeln, als wässrige Mischung mit Komponente A, als wässrige Mischung mit Komponente B oder als wässrige Mischung mit Komponente D in die Mischung(en) eingetragen werden.

### Komponente D

Als Zusatzstoffe (Komponente D) kommen alle an sich bekannten Zusatzstoffe in Frage mit Ausnahme der Komponente L, der Komponente A, der Komponente B und der Komponente C. Als Zusatzstoffe eignen sich z.B. Trennmittel, Hydrophobierungsmittel wie Paraffin-Emulsionen, Holzschutzmittel, Farbstoffe, Pigmente, Füllstoffe, Rheologiehilfsmittel, Formaldehydfänger, zum Beispiel Harnstoff oder Polyamine, Flammschutzmittel, Cellulose, z.B. nanokristalline Cellulose oder mikro-fibrillierte Cellulose. Derartige Zusatzstoffe sind beispielsweise in WO-A-2015/104349 als Komponenten D) und E) beschrieben.

Darüber hinaus kann Komponente D solche Bindemittel enthalten, welche sich von Komponente B unterscheiden, d.h. solche, die nicht Isocyanat-basiert sind. Derartige Bindemittel sind dem Fachmann grundsätzlich bekannt. Derartige Bindemittel sind zum Beispiel in M. Dunky, P. Niemz, Holzwerkstoffe und Leime: Technologie und Einflussfaktoren, Springer Berlin Heidelberg, 2002 (Teil II ab Seite 249) beschrieben. Insbesondere eignen sich Formaldehyd-Kondensationsharze, wie Harnstoff-Formaldehyd-Harze, Harnstoff-Melamin-Formaldehyd-Harze, Melamin-Formaldehyd-Harze, Phenol-Formaldehyd-Harze, Resorcinol-Formaldehyd-Harze, Resorcinol-Phenol-Formaldehyd-Harze, des Weiteren reaktive Schmelzklebersysteme (Ethylen-Vinylacetat, thermoplastisches Polyurethan, Polyamide, Thermoplastische Polyester, amorphe Poly-α-olefine), Polyvinylacetatleime, Bindemittel auf Basis nachwachsender Rohstoffe, wie Tannine, Lignine, Proteine (Kasein-, Glutin- und Blutalbuminleime) sowie deren Mischungen.

Die Querzugfestigkeit der erfindungsgemäßen Lignocellulosewerkstoffe beträgt gemessen nach DIN EN 319 vorzugsweise von 0,1 bis 1 N/mm².

Die Querzugfestigkeit der erfindungsgemäßen Spanplatten und Grobspanplatten mit Dicken von 3 bis 20 mm beträgt gemessen nach DIN EN 319 insbesondere 0,2 bis 0,8 N/mm², besonders bevorzugt 0,25 bis 0,6 N/mm², ganz besonders bevorzugt 0,3 bis 0,5 N/mm². Die Querzugfestigkeit der erfindungsgemäßen Spanplatten mit Dicken von über 20 bis 60 mm beträgt gemessen nach DIN EN 319 bevorzugt 0,1 bis 0,6 N/mm², besonders bevorzugt 0,15 bis 0,5 N/mm², ganz besonders bevorzugt 0,2 bis 0,4 N/mm².

Die Querzugfestigkeit der erfindungsgemäßen MDF und HDF beträgt gemessen nach DIN EN 319 bevorzugt 0,3 bis 1,0 N/mm², besonders bevorzugt 0,4 bis 0,9 N/mm², ganz besonders bevorzugt 0,5 bis 0,8 N/mm².

Ein weiterer Gegenstand der vorliegenden Erfindung sind die Lignocellulosewerkstoffe, die gemäß dem erfindungsgemäßen Verfahren erhältlich sind. Die erfindungsgemäßen Lignocellulosewerkstoffe finden insbesondere im Möbelbau, Hausbau, Innenausbau und Messebau Verwendung.

Die Lignocellulosewerkstoffe können in diesen Anwendungen als solche oder in weiterverabeiteter Form, z.B. lackiert, beschichtet mit Folie, Laminat oder Furnier, eingesetzt werden.

### Beispiele

### Materialien und Geräte

Die verwendeten Holzspäne (Komponente L) wiesen einen Wassergehalt von 2 - 5 Gew.-% bezogen auf das Trockengewicht der Späne auf. Für die Herstellung von Spanplatten wurde eine B/C-Spanmischung verwendet (Gewichtsverhältnis B:C = 60:40, wobei die B-Fraktion eine Spangröße von 0,5 - 2 mm und die C-Fraktion eine Spangröße von 2 - 4 mm aufwies). Als Bindemittel (Komponente B) wurde Lupranat^{®} M 20 R der BASF SE (ein polymeres MDI mit einer Funktionalität von ca. 2,7) verwendet. Es wurde ein Mischer eingesetzt, der mit einer Zweistoffdüse bestückt war, die mit Druckluft bei einem Druck von maximal 4 bar betrieben wurde. Als Vorpresse kam eine pneumatische Kolbenpresse zum Einsatz, in der die gestreute Matte in einem Metallrahmen mit den Maßen 30 cm x 30 cm verdichtet wurde. Die Heißpressung erfolgte gemäß Beispiel 2.

### Beispiel 1 (Kaltklebrigkeit, Push-off-Test)

Ansatz 1-1: Im Mischer wurden 5535 g Späne (Feuchte 2,5 Gew.-%, entspricht 5400 g Späne atro) vorgelegt und während des Mischens mit 216 g (4 Gew.-% atro) Lupranat^{®} M 20 R bedüst. Im Anschluss wurde die Mischung mit 400 g Wasser bedüst.

Ansatz 1-2: Im Mischer wurden 5535 g Späne (Feuchte 2,5 Gew.-%) vorgelegt und während des Mischens mit 108 g 50 Gew.-%iger wässriger Caprolactamlösung (1 Gew.-% atro) bedüst. Im Anschluss wurde die Mischung mit 346 g Wasser bedüst, so dass die Gesamtmenge Wasser aus Caprolactamlösung und Wasser auch hier 400 g ergab. Abschließend wurde die Mischung mit 216 g Lupranat^{®} M 20 R (4 Gew.-% atro) bedüst.

### Messung der Abbruchlänge (als Maß für die Kaltklebrigkeit):

Ein Teil der Mischung (150 g) aus Ansätzen 1-1 bis 1-2 wurde zu einer Höhe von 50 mm in eine Form geschüttet. Der Pressstempel wurde aufgesetzt und mit einem spezifischen Druck von 1 N/mm² 20 Sekunden in der Laborpresse verdichtet. Die vorgepresste Platte wurde aus der Form genommen und auf das Vorschubgerät gelegt. Anschließend wurde die Matte mit konstanter Vorschubgeschwindigkeit von 15 cm/min über die Tischkante geschoben bis die Matte aufgrund der Schwerkraft abbricht. Mithilfe eines mitgeführten Lineals wurde die Länge der überstehenden Matte bis zum Abbruch gemessen ("Abbruchlänge"). Dieser Vorgang wurde im Anschluss zweimal wiederholt, wobei die Presszeiten jeweils 80 Sekunden und 160 Sekunden betrugen.

Die Ergebnisse sind in Tabelle 1 zusammengestellt.

**Tabelle 1**

| Ansatz Nr. | Komponente (A) [Gew.-% atro] | Presszeit Vorpresse [sec.] | Abbruchlänge [cm] |
|---|---|---|---|
| 1-1 | - | 20 | 5,5 |
| 1-1 | - | 80 | 7,5 |
| 1-1 | - | 160 | 8 |
| 1-21 | Caprolactam [1] | 20 | 7,5 |
| 1-21 | Caprolactam [1] | 80 | 9 |
| 1-21 | Caprolactam [1] | 160 | 10 |

Tabelle 1 zeigt die Verbesserung der Abbruchlänge (Kaltklebrigkeit) bei gleicher Presszeit bei der Verwendung von Caprolactam als Komponente A im Gegensatz zu vorgepressten Platten ohne Komponente A.

### Beispiel 2 (Presszeit in der Heißpresse)

Ansatz 2-1: Im Mischer wurden 5654 g Späne (Feuchte 4,7 Gew.-%, entspricht 5400 g atro Späne) vorgelegt und während des Mischens mit 300 g Wasser bedüst. Im Anschluss wurde die Mischung mit 216 g (4 Gew.-% atro) Lupranat^{®} M 20 R bedüst.

Ansatz 2-2: Im Mischer wurden 5654 g Späne (Feuchte 4,7 Gew.-%) vorgelegt und während des Mischens mit 214 g Wasser bedüst. Im Anschluss wurde die Mischung mit 108 g 20 Gew.-%iger wässriger Caprolactamlösung (1 Gew.-% atro) bedüst, so dass die Gesamtmenge Wasser aus Caprolactamlösung und Wasser auch hier 300 g ergab. Abschließend wurde die Mischung mit 216 g Lupranat^{®} M 20 R (4 Gew.-% atro) bedüst.

Ansatz 2-3: Im Mischer wurden 5654 g Späne (Feuchte 4,7 Gew.-%) vorgelegt und während des Mischens mit 216 g 25 Gew.-%iger wässriger Caprolactamlösung (1 Gew.-% atro) bedüst. Im Anschluss wurde die Mischung mit 138 g Wasser bedüst, so dass die Gesamtmenge Wasser aus Caprolactamlösung und Wasser auch hier 300 g ergab. Abschließend wurde die Mischung mit 216 g Lupranat^{®} M 20 R (4 Gew.-% atro) bedüst.

Herstellung der Spanplatten und Bestimmung der Querzugfestigkeiten:

Nach Entnahme aus dem Mischer wurden 1100 g der Mischung aus den Ansätzen 2-1 bis 2-3 gleichmäßig in eine 30 x 30 cm² Form gestreut und mit einem spezifischen Druck von 1 N/mm² 30 Sekunden bei Raumtemperatur vorgepresst. Die erhaltene vorverdichtete Matte wurde unter Verwendung von Wachstrennpapier bei 210°C für die in Tabelle 4 angeführte Presszeit des entsprechenden Ansatzes gepresst. Der Pressdruck betrug für die ersten 2/3 der Presszeit 4 N/mm², anschließend für 1/6 der Presszeit 2 N/mm² und abschließend für 1/6 der Presszeit 1 N/mm². Die Plattendicke wurde durch die Verwendung von 16-mm-Abstandsleisten aus Metall eingestellt. Nach dem Pressvorgang wurde die fertige Spanplatte aus der Heißpresse entnommen und einen Tag lang stehend gelagert. Das Messen der Querzugfestigkeiten erfolgte nach DIN EN 319 an mindestens 8 Prüfkörpern je Spanplatte. Als Mindestpresszeit wird die Presszeit definiert, bei der eine stabile Platte mit einer Querzugfestigkeit von mindestens 0,4 N/mm² erhalten wird.

Die Ergebnisse sind in Tabelle 2 zusammengestellt.

**Tabelle 2**

| Ansatz Nr. | Komponente (A) | Mindestpresszeit [s] |
|---|---|---|
| 4-1 | - | 104 |
| 4-2 | Caprolactam 0,4% atro | 88 |
| 4-3 | Caprolactam 1,0% atro | 72 |

Tabelle 2 zeigt die Verbesserung der Mindestpresszeit bei erfindungsgemäßer Verwendung von Caprolactam als Komponente A.

## Patentansprüche

1. Verfahren zur Herstellung von ein- oder mehrschichtigen Lignocellulosewerkstoffen bestehend aus einer oder mehreren Schicht(en) (S) und gegebenenfalls einer oder mehreren weiteren Schicht(en) (WS) umfassend die Verfahrensschritte
(I) Mischen der Komponenten zu einer oder mehreren Mischung(en),
(II) Streuen der in Verfahrensschritt (I) hergestellten Mischung(en) zu einer Matte,
(III) Vorverdichtung der gestreuten Matte und
(IV) Erhitzen und Pressen der vorverdichteten Matte,
wobei die in Verfahrensschritt (I) verwendete(n) Mischung(en) für die eine oder mehreren Schicht(en) (S) Lignocellulose-Partikel (Komponente L),
• Caprolactam, Oligomere des Caprolactams oder deren Gemische (Komponente A),
• Bindemittel auf Basis von Isocyanat enthaltend mehrkerniges Diphenylmethandiisocyanat (Komponente B),
• Wasser (Komponente C) und
• gegebenenfalls einen oder mehrere Zusatzstoffe (Komponente D)
enthält.

2. Verfahren zur Herstellung von Lignocellulosewerkstoffen nach Anspruch 1, **dadurch gekennzeichnet, dass** die Mischung der Schicht (S) Lignocellulose-Partikel (Komponente L) und
• 0,5 bis 10 Gew.-% Komponente B,
• 3 bis 16 Gew.-% Komponente C und
• 0 bis 30 Gew.-% einer oder mehrerer Komponenten D und
• 0,001 bis 4 Gew.-% Komponente A
jeweils bezogen auf 100 Gew.-% Trockengewicht der Komponente L enthalten.

3. Verfahren nach einem der Ansprüche 1 oder 2, wobei Komponente A eine Mischung aus Caprolactam und Oligomeren des Caprolactam ist, wobei die Mischung eine zahlengemittelte Kettenlänge von mehr als 1 bis höchstens 10 aufweist.

4. Verfahren zur Herstellung von Lignocellulosewerkstoffen nach einem der Ansprüche 1 oder 2, wobei Komponente A Caprolactam ist.

5. Verfahren zur Herstellung von Lignocellulosewerkstoffen nach einem der Ansprüche 1 bis 4, wobei Komponente B eine Mischung aus 4,4'-Diphenylmethandiisocyanat und mehrkernigem Diphenylmethandiisocyanat enthält.

6. Verfahren zur Herstellung von Lignocellulosewerkstoffen nach einem der Ansprüche 1 bis 5, wobei Komponente B polymeres Diphenylmethandiisocyanat mit einer mittleren Funktionalität von mehr als zwei bis höchstens drei enthält-

7. Verfahren zur Herstellung von Lignocellulosewerkstoffen nach einem der Ansprüche 1 bis 6, **dadurch gekennzeichnet, dass** man als Komponente A 0,1 bis 1 Gew.-% Caprolactam bezogen auf 100 Gew.-% Trockengewicht der Komponente L einsetzt.

8. Verfahren zur Herstellung von Lignocellulosewerkstoffen nach einem der Ansprüche 1 bis 6, **dadurch gekennzeichnet, dass** man als Komponente A 0,1 bis 1 Gew.-% einer Mischung aus Caprolactam und Oligomere des Caprolactams bezogen auf 100 Gew.-% Trockengewicht der Komponente L einsetzt.

9. Verfahren nach einem der Ansprüche 1 bis 8, wobei Komponente A in einer wässrigen Lösung mit einer Konzentration von mindestens 25 Gew.-% bezogen auf das Gesamtgewicht der Lösung eingesetzt wird.

10. Verfahren zur Herstellung von Lignocellulosewerkstoffen nach einem der Ansprüche 1 bis 8, wobei Komponente A als Lösung in einem Polyol oder einer Mischung aus Polyolen oder einer Mischung aus Polyol(en) und Wasser eingesetzt wird.

11. Verfahren zur Herstellung von Lignocellulosewerkstoffen nach Anspruch 10, wobei die Konzentration der Komponente A mindestens 25 Gew.-% bezogen auf das Gesamtgewicht der Lösung beträgt.

12. Verfahren zur Herstellung von Lignocellulosewerkstoffen nach einem der Ansprüche 1 bis 11, **dadurch gekennzeichnet, dass** das Erhitzen in Verfahrensschritt (IV) thermisch oder durch ein elektrisches Hochfrequenzfeld oder eine Kombination aus beiden erfolgt.

13. Verfahren zur Herstellung von Lignocellulosewerkstoffen nach einem der Ansprüche 1 bis 12, **dadurch gekennzeichnet, dass** die Lignocellulosewerkstoffe MDF (Mitteldichte Faserplatte), HDF (Hochdichte Faserplatte), PB (Spanplatte), OSB (Grobspanplatte) oder WFI (Holzfaserdämmmatte) sind.

14. Lignocellulosewerkstoffe, erhältlich gemäß einem der Ansprüche 1 bis 13.

15. Lignocellulosewerkstoffe gemäß Anspruch 14 mit einer Querzugsfestigkeit nach DIN EN ISO 319 von 0,1 N/mm² bis 1 N/mm²

16. Verwendung der Lignocellulosewerkstoffe gemäß Anspruch 14 oder 15 im Möbelbau, Hausbau, Innenausbau und/oder Messebau.

## Claims

1. A method for producing single- or multilayer lignocellulose materials composed of one or a plurality of layer (s) (Lr) and optionally one or a plurality of further layer(s) (FLr) comprising the method steps of
(I) mixing of the components into one or a plurality of mixture(s),
(II) scattering of the mixture(s) produced in method step (I) to form a mat,
(III) precompression of the scattered mat and
(IV) heating and pressing of the precompressed mat,
wherein the mixture (s) used in method step (I) for the one or a plurality of layer(s) (Lr) comprises lignocellulose particles (component L),
• caprolactam, oligomers of caprolactam or mixtures thereof (component A),
• binders based on isocyanate comprising polycyclic diphenylmethane diisocyanate (component B),
• water (component C) and
• optionally one or a plurality of additives (component D).

2. The method for producing lignocellulose materials according to claim 1, wherein the mixture of the layer (Lr) comprises lignocellulose particles (component L) and
• 0.5 to 10 wt% of component B,
• 3 to 16 wt% of component C, and
• 0 to 30 wt% of one or a plurality of components D and
• 0.001 to 4 wt% of component A
relative in each case to 100 wt% in dry weight of component L.

3. The method according to one of claims 1 or 2, wherein component A is a mixture of caprolactam and oligomers of caprolactam, wherein the mixture has a number average chain length of more than 1 to a maximum of 10.

4. The method for producing lignocellulose materials according to one of claims 1 or 2, wherein component A is caprolactam.

5. The method for producing lignocellulose materials according to one of claims 1 to 4, wherein component B comprises a mixture of 4,4'-diphenylmethane diisocyanate and polycyclic diphenylmethane diisocyanate.

6. The method for producing lignocellulose materials according to one of claims 1 to 5, wherein component B comprises polymeric diphenylmethane diisocyanate with an average functionality of more than two to a maximum of three.

7. The method for producing lignocellulose materials according to one of claims 1 to 6, wherein 0.1 to 1 wt% of caprolactam relative to 100 wt% in dry weight of component L is used as component A.

8. The method for producing lignocellulose materials according to one of claims 1 to 6, wherein 0.1 to 1 wt% of a mixture of caprolactam and oligomers of caprolactam relative to 100 wt% in dry weight of component L is used as component A.

9. The method according to one of claims 1 to 8, wherein component A is used in an aqueous solution with a concentration of at least 25 wt% relative to the total weight of the solution.

10. The method for producing lignocellulose materials according to one of claims 1 to 8, wherein component A is used as a solution in a polyol or a mixture of polyols or a mixture of polyol(s) and water.

11. The method for producing lignocellulose materials according to claim 10, wherein the concentration of component A is at least 25 wt% relative to the total weight of the solution.

12. The method for producing lignocellulose materials according to one of claims 1 to 11, wherein the heating in method step (IV) is carried out thermally or by means of an electrical high-frequency field or a combination of the two.

13. The method for producing lignocellulose materials according to one of claims 1 to 12, wherein the lignocellulose materials are MDF (medium-density fiberboard), HDF (high-density fiberboard), PB (particle board), OSB (oriented strand board) or WFI (wood fiber insulation board).

14. Lignocellulose materials, obtainable according to one of claims 1 to 13.

15. The lignocellulose materials according to claim 14, with a transverse tensile strength according to DIN EN ISO 319 of 0.1 N/mm² to 1 N/mm².

16. The use of the lignocellulose materials according to claim 14 or 15 in furniture construction, housing construction, interior design and/or exhibition construction.

## Revendications

1. Procédé pour la production de matériaux à base de lignocellulose mono- ou multicouches constitués d'une ou de plusieurs couche(s) (S) et éventuellement d'une ou de plusieurs couche(s) supplémentaire(s) (WS), comprenant les étapes de processus
(I) mélange des composants pour obtenir un ou plusieurs mélange(s),
(II) dispersion du/des mélange(s) produit(s) dans l'étape (I) du processus, pour obtenir une nappe,
(III) pré-consolidation de la nappe de dispersion et
(IV) chauffage et pressage de la nappe pré-consolidée,
dans lequel le(s) mélange(s) utilisé(s) dans l'étape (I) du processus contient/contiennent pour ladite/lesdites une ou plusieurs couche(s) (S) des particules de lignocellulose (composant L),
• du caprolactame, des oligomères du caprolactame ou des mélanges de ceux-ci (composant A),
• un liant à base d'isocyanate, contenant du diisocyanate de diphénylméthane polynucléaire (composant B),
• de l'eau (composant C) et
• éventuellement un ou plusieurs additifs (composant D) .

2. Procédé pour la production de matériaux à base de lignocellulose selon la revendication 1, **caractérisé en ce que** le mélange de la couche (S) contient des particules de lignocellulose (composant L) et
• 0,5 à 10 % en poids de composant B,
• 3 à 16 % en poids de composant C et
• 0 à 30 % en poids d'un ou de plusieurs composants D et
• 0,001 à 4 % en poids de composant A
chaque fois par rapport à 100 % en poids du poids sec du composant L.

3. Procédé selon l'une quelconque des revendications 1 et 2, dans lequel le composant A est un mélange de caprolactame et d'oligomères du caprolactame, le mélange présentant une longueur de chaîne en moyenne en nombre de plus de 1 à 10 au maximum.

4. Procédé pour la production de matériaux à base de lignocellulose selon l'une quelconque des revendications 1 et 2, dans lequel le composant A est le caprolactame.

5. Procédé pour la production de matériaux à base de lignocellulose selon l'une quelconque des revendications 1 à 4, dans lequel le composant B contient un mélange de 4,4'-diisocyanate de diphénylméthane et de diisocyanate de diphénylméthane polynucléaire.

6. Procédé pour la production de matériaux à base de lignocellulose selon l'une quelconque des revendications 1 à 5, dans lequel le composant B contient du diisocyanate de diphénylméthane polymère ayant une fonctionnalité moyenne de plus de deux à trois au maximum.

7. Procédé pour la production de matériaux à base de lignocellulose selon l'une quelconque des revendications 1 à 6, **caractérisé en ce qu'**on utilise en tant que composant A 0,1 à 1 % en poids de caprolactame par rapport à 100 % en poids de poids sec du composant L.

8. Procédé pour la production de matériaux à base de lignocellulose selon l'une quelconque des revendications 1 à 6, dans lequel on utilise en tant que composant A 0,1 à 1 % en poids d'un mélange de caprolactame et d'oligomères du caprolactame, par rapport à 100 % en poids de poids sec du composant L.

9. Procédé selon l'une quelconque des revendications 1 à 8, dans lequel le composant A est utilisé en une solution aqueuse ayant une concentration d'au moins 25 % en poids par rapport au poids total de la solution.

10. Procédé pour la production de matériaux à base de lignocellulose selon l'une quelconque des revendications 1 à 8, dans lequel le composant A est utilisé sous forme de solution dans un polyol ou un mélange de polyols ou un mélange de polyol(s) et d'eau.

11. Procédé pour la production de matériaux à base de lignocellulose selon la revendication 10, dans lequel la concentration du composant A est d'au moins 25 % en poids par rapport au poids total de la solution.

12. Procédé pour la production de matériaux à base de lignocellulose selon l'une quelconque des revendications 1 à 11, **caractérisé en ce que** le chauffage dans l'étape (IV) du processus s'effectue thermiquement ou par un champ électrique à haute fréquence ou une combinaison des deux.

13. Procédé pour la production de matériaux à base de lignocellulose selon l'une quelconque des revendications 1 à 12, **caractérisé en ce que** les matériaux à base de lignocellulose sont des MDF (panneau de fibres à densité moyenne), des HDF (panneau de fibres à haute densité), du PB (panneau de particules), de l'OSB (panneau de grandes particules) ou de la WFI (nappe isolante en fibres de bois).

14. Matériaux à base de lignocellulose, pouvant être obtenus selon l'une quelconque des revendications 1 à 13.

15. Matériaux à base de lignocellulose selon la revendication 14, ayant une résistance à la traction transversale selon DIN EN ISO 319 de 0,1 N/mm² à 1 N/mm².

16. Utilisation des matériaux à base de lignocellulose selon la revendication 14 ou 15 dans la construction de meubles, la construction d'habitations, l'aménagement intérieur et/ou l'aménagement de foires-expositions.
